**Europäisches Patentamt**

**European Patent Office**

**Office européen des brevets**

(19)

(11) Veröffentlichungsnummer: **0 325 740 B1**

(12) # EUROPÄISCHE PATENTSCHRIFT

(45) Veröffentlichungstag der Patentschrift: **15.02.95**

(51) Int. Cl.6: **C08K 5/00**, C08K 5/43, C08L 77/06

(21) Anmeldenummer: **88120245.1**

(22) Anmeldetag: **05.12.88**

(54) **In der Kälte schlagzähe thermoplastische Formmassen.**

(30) Priorität: **28.01.88 DE 3802510**

(43) Veröffentlichungstag der Anmeldung:
**02.08.89 Patentblatt 89/31**

(45) Bekanntmachung des Hinweises auf die
Patenterteilung:
**15.02.95 Patentblatt 95/07**

(84) Benannte Vertragsstaaten:
**AT BE CH DE ES FR GB IT LI NL SE**

(56) Entgegenhaltungen:
**US-A- 2 757 156**
**US-A- 4 399 246**

(73) Patentinhaber: **HÜLS AKTIENGESELLSCHAFT**

**D-45764 Marl (DE)**

(72) Erfinder: **Bartmann, Martin, Dr.**
**Burgstrasse 35**
**D-4350 Recklinghausen (DE)**
Erfinder: **Feinauer, Roland, Dr.**
**Flämingstrasse 34**
**D-4370 Marl (DE)**
Erfinder: **Hartkopf, Uwe, Dr.**
**Johannis-Grüter-Strasse 25**
**D-4358 Haltern (DE)**
Erfinder: **Schlobohm, Michael, Dr.**
**Lipper Weg 195**
**D-4370 Marl (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind in der Kälte schlagzähe thermoplastische Formmassen.

An die Stoffeigenschaften von thermoplastischen Formmassen, z. B. für Förderleitungen, werden seitens dar Praxis hohe Anforderungen gestellt. Gegenüber dem geförderten Gut müssen sie sich inert verhalten und müssen auch für den Fall einer thermischen Belastung formbeständig bleiben. Für Leitungen, die im Freien verwendet werden, besteht die Notwendigkeit, daß sie den Witterungseinflüssen standhalten. Dies bedeutet, daß sie unter der Einwirkung von Sonneneinstrahlung, Luftfeuchtigkeit, Kälte usw. ihre Gebrauchseigenschaften im wesentlichen nicht verlieren dürfen.

Generell geeignet für Formteile sind alle üblichen Polyamide (PA). Dennoch bestehen - insbesondere für den Einsatz im Freien - Einschränkungen. So sind von den technisch eingesetzten Polyamiden, welche zumindest ein Monomeres mit ≤ 10 C-Atomen in der Kohlenstoffkette besitzen, keine bekannt, die nicht stark gegen Wasser bzw. Luftfeuchtigkeit empfindlich sind. Dadurch fällt die Schlagzähigkeit, vor allem diejenige in der Kälte, stark ab (Kunststofftaschenbuch, 19. Aufl., C. Hanser Verlag - S. 294/295, Tabelle).

Besser geeignet sind Polyamide mit höherer C-Atomzahl in der Kohlenstoffkette wie z. B. PA 11 bzw. PA 12, da sie eine erhöhte Witterungsstabilität und damit auch eine verbesserte Kälteschlagzähigkeit aufweisen. Bei diesen technisch gut zugänglichen höheren Polyamiden besteht jedoch der Nachteil, daß im Falle der Mitverwendung von Weichmachern auch wiederum die Kälteschlagzähigkeit abfällt. Dieses Problem muß durch den Zusatz eines Schlagzähmodifiers ausgeräumt werden (DE-AS 27 16 004). Jedoch ist der Fachmann dann gezwungen, mit einem 3-Komponenten-System zu arbeiten.

Weiterer Nachteil von PA 11 bzw. PA 12 ist - da sie aus einem Lactam bzw. der entsprechenden Aminocarbonsäure hergestellt werden, daß das rohe Polymere naturgemäß noch Mono- und Oligomere enthält, die aus den Produkt in einem zusätzlichen Arbeitsgang entfernt werden müssen. -

Weichmacher und ihr Einsatz bei Polyamiden sind gleichfalls bekannt.

Aufgabe der Erfindung war es, eine Formmasse auf Basis eines Polyamids zur Verfügung zu stellen, die auch bei Verwendung von Weichmachern sowie unter Einfluß der Witterung (z. B. Feuchtigkeit) nicht ihre kälteschlagzähen Eigenschaften verliert. Vorzugsweise sollte es sich um ein 2-Komponenten-System handeln.

Die Aufgabe wurde durch eine Formmasse, bestehend aus einem

I. Polyamid 1212 mit einer relativen Viskosität im Bereich von 1,5 bis 3,0 und

II. 2 bis 25 Gewichtsprozent, bezogen auf das Polyamid, eines Weichmachers gelöst.

Bevorzugte PA 1212 sind solche mit einer relativen Viskosität im Bereich von 1,8 bis 2,5

Die Kennzeichnung der Polyamide als PA 1212 entspricht internationaler Norm, wobei die erste(n) Ziffer(n) die C-Atomzahl des Ausgangsamins und die letzte(n) Ziffer(n) die C-Atomzahl der Dicarbonsäure angeben. Wird nur eine Zahl angegeben, so bedeutet dies, daß von einer Aminocarbonsäure bzw. deren Lactamen ausgegangen worden ist. (H. Domininghaus, Die Kunststoffe und ihre Eigenschaften, VDI-Verlag 1976, S. 272).

Eine allgemeine Übersicht über Weichmacher, die für PA geeignet sind, können Gächter/Müller, Kunststoffadditive, Hanser Verlag, 2. Ausgabe, S. 296 entnommen werden.

Als Weichmacher geeignete, übliche Verbindungen sind z. B. Ester der p-Hydroxybenzoesäure mit 2 bis 12 C-Atomen in der Alkoholkomponente, Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, Toluolsulfonsäure-n-butylamid, Toluolsulfonsäure-n-octylamid, Benzolsulfonsäure-n-butylamid, Benzolsulfonsäure-n-2-ethylhexylamid infrage. Bevorzugter Weichmacher ist Benzolsulfonsäure-n-butylamid.

Im Vorzugsbereich enthält die erfindungsgemäße Formmasse 4 bis 20 Gew.-% Weichmacher - jeweils bezogen auf das Polyamid.

Neben den Weichmachern können die erfindungsgemäßen Formmassen noch übliche Hilfs- und Zusatzstoffe wie Stabilisatoren, Pigmente, Füllstoffe, Elastifizierungsmittel enthalten.

Die erfindungsgemäßen Formmassen können noch mit anderen Polyamiden oder hierfür bekannten Polymeren abgemischt werden - vorausgesetzt, die gewünschten erfindungsgemäßen Eigenschaften werden nicht verschlechtert.

Die Herstellung der erfindungsgemäßen Formmassen erfolgt nach den üblichen aus dem Stand der Technik bekannten Methoden, wie z. B. Homogenisieren von Basispolyamid, Weichmacher und gegebenenfalls Hilfs- und Zusatzstoffen auf einem Zweiwellenkneter oder Eindiffundieren des Weichmachers gegebenenfalls zusammen mit im Weichmacher löslichen Hilfs- und Zusatzstoffen in das Basispolyamidgranulat.

Die erfindungsgemäßen Formmassen zeigen gegenüber anderen aus der Technik bekannten Formmassen auf Basis von PA eine Reihe von unerwarteten guten Eigenschaften. So ist es vorteilhaft, daß mit einem 2-Komponenten-System gearbeitet werden kann. Im Vergleich zu PA mit niederer C-Atomzahl ($\leq$ 10) in den Ausgangsmonomeren werden erfindungsgemäß Formteile erhalten, die auch unter dem Einfluß von Witterung - insbesondere in der Kälte - ihre guten Eigenschaften beibehalten; dies gilt auch im Vergleich zu weichgemachtem PA mit hoher C-Atomzahl . Ein weiterer Vorteil gegenüber PA 11 bzw. PA 12 ist darin zu sehen, daß nunmehr PA zur Verfügung stehen, bei denen es nicht erforderlich ist, aus dem Rohpolymeren in einem zusätzlichen Arbeitsgang Monomere und niedermolekulare Anteile extrahieren zu müssen.

Die in der Beschreibung und in den Beispielen genannten Parameter wurden mit Hilfe nachstehender Verfahren bestimmt.

Die relative Viskosität ($eta_{rel.}$) der PA wird in m-Kresol (0,5 g PA in $100 cm^3$ m-Kresol ) bei 25 $^\circ$C bestimmt (DIN 53 727).

Die Kälteschlagzähigkeit der in den Beispielen eingesetzten Formmassen wurde an Rohren mit einem Außendurchmesser von 6,35 mm und einer Wandstärke von 1 mm gemessen. Die Rohre wurden auf einem 20-D-Einschneckenextruder mit 3-Zonenschnecke bei einer Massetemperatur von etwa 220 bis 240 $^\circ$C hergestellt.

Einen Teil der Rohre läßt man unbehandelt, ein zweiter Teil wird zwei Stunden in Wasser gekocht und ein dritter Teil 24 Stunden bei 110 $^\circ$C an Luft im Wärmeofen getempert. Je 10 der getemperten, gekochten bzw. unbehandelten Rohre werden bei -40 $^\circ$C einer Kälteschlagzähigkeitsprüfung nach SAE J 844 unterworfen. Die Zahl der gebrochenen Rohre ist in der untenstehenden Tabelle aufgeführt. -
Der mit Buchstaben gekennzeichnete Versuch ist nicht erfindungsgemäß.

Beispiele

Herstellung von PA 1212

In einem druckfesten Polykondensationskessel werden bei einer Innentemperatur von 160 $^\circ$C 42,8 Gew.-Teile 1,12-Dodecandiamin(DA-12)/Dodecandisäure(DDS)-Salz (hergestellt aus 19,91 Gew.-Teilen DA-12 und 22,89 Gew.-Teilen DDS) und 0,05 Gew.-Teilen DDS vorgelegt. Anschließend wird der Kessel durch fünfmaliges Anlegen von Vakuum bzw. Befüllen mit Stickstoff inertisiert. Hierzu gibt man über eine Schleuse eine Mischung aus 4 Gew.-Teilen Wasser und 0,01 Gew.-Teil $H_3PO_4$ zu und heizt dann innerhalb von 120 Minuten unter Rühren auf eine Innentemperatur von 220 $^\circ$C auf, wobei sich ein Druck von 19 bar einstellt. Anschließend wird über einen Zeitraum von 90 Minuten der Druck kontinuierlich entspannt und der Kesselinhalt auf eine Innentemperatur von 260 $^\circ$C aufgeheizt. Nach Erreichen der gewünschten Schmelzeviskosität wird der Rührer abgestellt, ein Stickstoffüberdruck von 20 bar eingestellt und nach 30 Minuten Absitzzeit wird das PA 1212 ($eta_{rel.}$ = 1,89) mit Hilfe einer Spinnpumpe ausgefahren und nach Abkühlen in einem Wasserbad granuliert.

Zur Einstellung des $eta_{rel.}$-Wertes auf 2,15 wird das PA 1212 bei 170 $^\circ$C in fester Phase nachkondensiert.

Herstellung von PA 12

Die Herstellung erfolgt gemäß Beispiel 1 von DE-PS 21 52 194. Um die endgültige Höhe des $eta_{rel.}$-Wertes zu erreichen, wird das PA 12 nachkondensiert.

Herstellung der Formmasse

100 Gew.-Teile PA, 1 Gew.-Teil N,N'-Hexamethylen-bis-(3,5-di-tert.-butyl-4-hydroxi)dihydrozimtsäureamid sowie die in der Tabelle angeführte Menge Weichmacher werden in einem Doppelschneckenextruder homogenisiert, granuliert und auf eine Restfeuchte von $<$ 0,05 Gew.-% getrocknet.

Tabelle

| Versuch-Nr. | Polyamid | Viskosität (DIN 53 727) | Weichmacher Art 1) | Menge 2) | Kälteschlagprüfung (-40 °C) 3) | | |
|---|---|---|---|---|---|---|---|
| | | | | | unbehandelt | n. Kochen | n. Tempern |
| 1 | 1212 | 1,89 | BBSA | 14 | 0 | 1 | 0 |
| 2 | 1212 | 2,15 | BBSA | 14 | 0 | 0 | 0 |
| 3 | 1212 | 2,15 | EHBA | 14 | 0 | 0 | 1 |
| 4 | 1212 | 1,89 | BBSA | 7 | 0 | 0 | 0 |
| A | 12 | 2,15 | BBSA | 14 | 6 | 9 | 7 |

1) Weichmacher:
BBSA: N-Butylbenzolsulfonsäureamid
EHBA: N-2-Ethylhexylbenzolsulfonsäureamid
2) Gew.-Tl. Weichmacher/100 Gew.-Tl. PA
3) Angegeben wird die Anzahl gebrochener Rohre

**Patentansprüche**

1. In der Kälte schlagzähe thermoplastische Formmasse, bestehend aus einem
   I. Polyamid 1212 mit einer relativen Viskosität im Bereich von 1,5 bis 3,0
   und
   II. 2 bis 25 Gewichtsprozent - bezogen auf das Polyamid - eines Weichmachers, sowie üblichen Hilfs- und Zusatzstoffen

4

**2.** Formmasse gemäß Anspruch 1,
wobei das Polyamid 1212 eine relative Viskosität im Bereich von 1,8 bis 2,5 hat.

**3.** Formmasse gemäß den Ansprüchen 1 und 2
mit einem Gehalt an Weichmacher von 4 bis 20 Gewichtsprozent - bezogen auf das Polyamid.

**4.** Formmasse gemäß den Ansprüchen 1 bis 3
zur Herstellung von Hohlprofilen.

**Claims**

**1.** A thermoplastic moulding composition possessing good low-temperature impact strength, which comprises
I. polyamide 1212 having a relative viscosity in the range from 1.5 to 3.0 and
II. 2 to 25 per cent by weight - based on the polyamide - of a plasticizer, as well as conventional auxiliaries and additives.

**2.** A moulding composition according to Claim 1, wherein the polyamide 1212 has a relative viscosity in the range from 1.8 to 2.5.

**3.** A moulding composition according to either of Claims 1 and 2, which contains from 4 to 20 per cent by weight, based on the polyamide, of plasticizer.

**4.** A moulding composition according to any of Claims 1 to 3, for the production of hollow profiles.

**Revendications**

**1.** Masse à mouler thermoplastique résistant au choc à froid, constituée :
I . par de la polyamide 1212 d'une viscosité relative comprise dans un domaine de 1,5 à 3,0 et
II. par 2 à 25 % en poids, relativement à la polyamide, d'un plastifiant, ainsi que par des adjuvants et additifs usuels.

**2.** Masse à mouler selon la revendication 1,
la polyamide 1212 ayant une viscosité relative comprise dans un domaine de 1,8 à 2,5.

**3.** Masse à mouler selon les revendications 1 et 2,
présentant une teneur en plastifiant de 4 à 20 % en poids, relativement à la polyamide.

**4.** Masse à mouler selon les revendications 1 à 3,
pour la fabrication de profilés creux.